(19) Europäisches Patentamt
European Patent Office
Office européen des brevets

(11) EP 1 372 081 B1

(12) **EUROPEAN PATENT SPECIFICATION**

(45) Date of publication and mention
of the grant of the patent:
**11.04.2007 Bulletin 2007/15**

(51) Int Cl.:
***G06F 13/38*** (2006.01)

(21) Application number: **03013655.0**

(22) Date of filing: **16.06.2003**

(54) **Interface device for peripherals and priority control method therefor**

Peripherieschnittstellenvorrichtung und Prioritätssteuerungsverfahren

Dispositif d'interface pour périphériques et méthode de contrôle de priorité

(84) Designated Contracting States:
**DE GB**

(30) Priority: **14.06.2002 KR 2002033404**

(43) Date of publication of application:
**17.12.2003 Bulletin 2003/51**

(73) Proprietor: **SAMSUNG ELECTRONICS CO., LTD.
Suwon City, Kyungki-do (KR)**

(72) Inventor: **Choi, Ho-joong
Paldal-gu,
Suwon-si,
Gyeonggi-do (KR)**

(74) Representative: **Grünecker, Kinkeldey,
Stockmair & Schwanhäusser
Anwaltssozietät
Maximilianstrasse 58
80538 München (DE)**

(56) References cited:
**EP-A- 1 111 498**      **WO-A-99/48014**
**US-A- 5 922 062**

## Description

BACKGROUND OF THE INVENTION

1. Field of the Invention

The present invention relates to a peripheral interface device, and more particularly, to a peripheral interface device capable of supporting a plurality of interfaces, and a priority control method therefor.

2. Description of the Related Art

With development of information communications equipment, a variety of interface methods have been introduced, for example, including Institute of Electrical and Electronics Engineers 1394 (IEEE1394), a universal serial bus (USB), a universal asynchronous receiver/transmitter (UART), a recommended standard 232 revision C (RS232C), etc. Among them, the IEEE1394 and the USB are widely employed as the interface methods for computers.

Meanwhile, there is no limit to the number of peripherals that can be connected to a computer, while the number of ports the computer can provide is limited. Accordingly, it is preferable that a peripheral device can support a plurality of interface methods.

For example, a hard disc that is a representative computer peripheral is offered with a capacity of tens of gigabytes today, and the utilization of the hard disc continues to extend. Also, to increase mobility, portable hard discs are offered.

At present, an Intel-compatible computer supports 2 hard disc buses, each of which can connect 2 hard discs (master and slave). Considering that 1 or 2 CD-ROM drives (or DVD-ROM drives) and 1 CD-RW drive are normally used, only 2 hard discs can be connected through the hard disc buses, and it is difficult to connect more hard discs.

Accordingly, hard discs supporting multiple interface methods such as the IEEE1394 and the USB are being introduced.

These hard discs supporting the multiple interfaces have a plurality of bridges (a bridge converts a signal of an interface method into a signal of another interface method), and selectively use one of the bridges. For example, an USB/integrated drive electronics (USB/IDE) bridge converts a signal of the USB interface method into a signal of the IDE interface that is the standard for a hard disc.

The hard discs supporting these multiple interfaces may be divided by a direct connection method and a multiplexer-using method.

A hard disc of the direct connection method has connection ports for respective interface methods and bridges connected to the respective connection ports. Which bridge is to be used is determined only by selection of a user.

A hard disc of the multiplexer-using method has connection ports for respective interface methods and bridges connected to the respective connection ports. Using the multiplexer, one of signals converted in bridges appropriate to respective interface methods is selectively used:

However, the hard disc of the prior art direct connection method cannot identify the interface method and correctly respond to the interface when 2 or more interface using different methods are connected, such that the interfaces cause defects or troubles in operation

Also, in the hard disc of the prior art multiplexer-using method, power is provided not only to a bridge being used but also to other bridges not in use such that other bridges also operate to cause noise and waste of power, and the use of the multiplexer puts an obstacle to minimization of a external or portable hard disc.

The closest coming prior art is EP 1 111 498.

SUMMARY OF THE INVENTION

To solve the above problems, it is an objective of the present invention to provide a peripheral interface device which supports a plurality of interface methods and can control the priority among peripherals when the peripherals are connected through 2 or more interface ports.

Also, to solve the above problems, it is another objective of the present invention to provide a priority control method appropriate to the interface device.

According to an aspect of the present invention, there is provided a peripheral interface device including a plurality of ports, a plurality of interface converters, a priority determining unit, a port selection unit, and a connection unit. The plurality of ports receive signals appropriate to a plurality of interface methods. The plurality of interface converters are connected to respectively appropriate ports and converts signals of interface methods corresponding to the ports into signals of interface methods appropriate to a hard disc. The priority determining unit receives the signals of respective interface methods from the plurality of ports, identifies the method of a connected interface, and when two or more interfaces are connected, determines the priority among the interfaces. The port selection unit, according to the result of identification by the priority control unit, controls supply of power in order to selectively operate the plurality of interface converters.

According to another aspect of the present invention, there is provided a priority control method of a peripheral interface device having at least two ports, each of which supports one interface method, and two interface converters which are connected to respectively appropriate ports and converts signals of interface methods corresponding to the ports into signals of interface methods appropriate to a peripheral. A priority between the two ports is read. Based on the read priority setting, it is determined whether or not a high priority port is connected. If the higher priority port is connected, the higher priority port is selected, and power provided to a converter corresponding to the remaining lower priority port is cut off. If the higher priority port is not connected, it is determined whether or not the lower priority port is connected, and if the lower priority port is connected, the port is selected, and power provided to a converter corresponding to the remaining higher priority port is cut off.

## BRIEF DESCRIPTION OF THE DRAWINGS

The above objects and advantages of the present invention will become more apparent by describing in detail preferred embodiments thereof with reference to the attached drawings in which:

FIG. 1 is a diagram showing a structure of a prior art portable hard disc;
FIG. 2 is a diagram showing another structure of a prior art portable hard disc;
FIG. 3 is a block diagram showing the structure of a preferred embodiment of a peripheral interface device according to the present invention;
FIG. 4 is a circuit diagram showing a detailed structure of a port selection unit shown in FIG. 3;
FIG. 5 is a diagram of the structure of a buffer for generating complementary signals (USB_EN, 1394_EN) that are input to a device shown in FIG. 4;
FIG. 6 is an exemplary block diagram of the structure of another preferred embodiment of the present invention that is applied to a plurality of interface types;
FIG. 7 is a flowchart showing a preferred embodiment of a peripheral interface method according to the present invention; and
FIG. 8 is a flowchart showing another preferred embodiment of a peripheral interface method according to the present invention.

## DESCRIPTION OF THE PREFERRED EMBODIMENTS

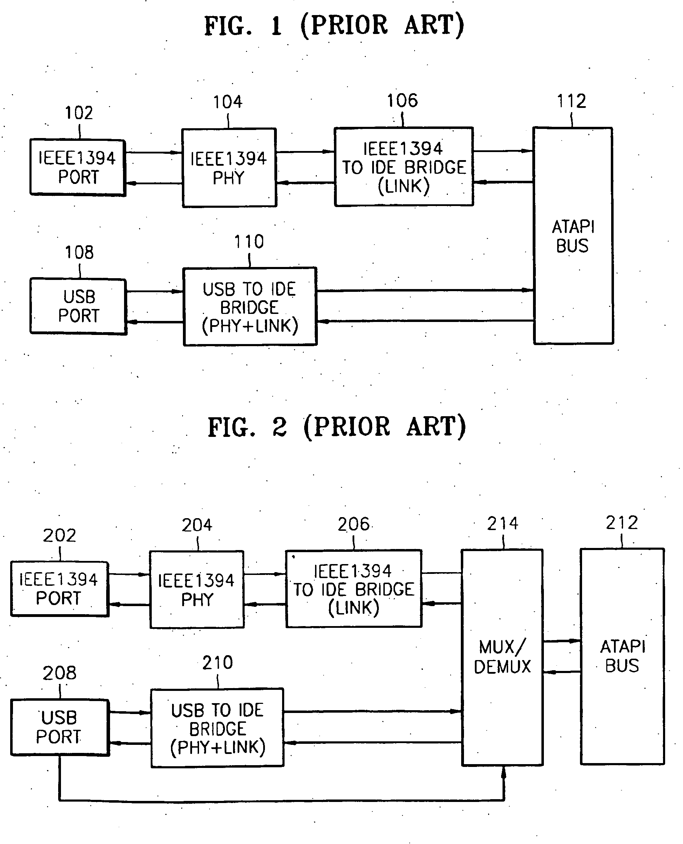

As shown in FIG. 1, the hard disc of the prior art direct connection method comprises an IEEE1394 port 102 to which an IEEE1394 connector can be connected; an IEEE1394 physical layer processor 104 which processes the physical layer of an IEEE1394 signal; an IEEE1394/IDE bridge 106 which processes the link layer of an IEEE1394 signal; a USB port 108 to which a USB connector can be connected; a USB/IDE bridge 110 which processes the physical layer and link layer of a USB signal; and an advanced technology attachment packet interface (ATAPI) bus connector 112.

In the hard disc shown in FIG. 1, a user selectively uses only one of the IEEE1394 port 102 and the USB port 108.

However, since in the hard disc of FIG. 1, the IEEE1394 physical layer processor 104, the IEEE1394/IDE bridge 106, and the USB/IDE bridge 110 always operate, if one method is used, the bridge of the other method wastes power and may cause noise into the ATAPI signal.

Also, if both the IEEE1394 port 102 and the USB port 108 are connected by the user's careless mistake, the hard disc may not work properly.

FIG. 2 is a diagram showing another structure of a prior art portable hard disc that uses the multiplexer-using method.

As shown in FIG. 2, the hard disc of the prior art multiplexer-using method comprises an IEEE1394 port 202 to which an IEEE1394 connector can be connected; an IEEE1394 physical layer processor 204 which processes the physical layer of an IEEE1394 signal; an IEEE1394/IDE bridge 206 which processes the link layer of an IEEE1394 signal; a USB port 208 to which a USB connector can be connected; a USB/IDE bridge 210 which processes the physical layer and link layer of a USB signal; a multiplexer/demultiplexer 214 which selectively outputs one of the outputs of the IEEE1394/IDE bridge 206 and the USB/IDE bridge 210; and an ATAPI bus connector 212.

In the hard disc of FIG. 2, the operation of the multiplexer/demultiplexer 214 is controlled by a signal provided to the USB port 208. A USB connector comprises a power pin (Vp), a ground pin (GROUND), and 2 differential signal pins (D1, D2). A selection operation of the multiplexer/demultiplexer 214 is controlled by USB power (Vusb) provided to the power pin (Vp). That is, if the USB power (Vusb) is provided, the multiplexer/demultiplexer 214 operates to connect the USB/IDE bridge 210 to the ATAPI bus connector 212, while if the USB power (Vusb) is not provided, operates to connect the IEEE1394/IDE bridge 206 to the ATAPI bus connector 212.

By the operation of the multiplexer/demultiplexer 214, when both the IEEE1394 port 102 and the USB port 108 are connected, the hard disc of FIG. 2 appropriately determines the interface method being used and respond to it.

However, also in the hard disc of FIG. 2 as in the hard disc of FIG. 1, the IEEE1394 physical layer processor 204, the IEEE1394/IDE bridge 206, and the USB/IDE bridge 210 always operate, if one method is used, the bridge of the other method wastes power and may cause noise into the ATAPI signal.

Meanwhile, since the multiplexer/demultiplexer 214 should correspond to the number of IDE-type signal lines, it is difficult to minimize the size of the portable hard disc, and the switching operation may cause noise.

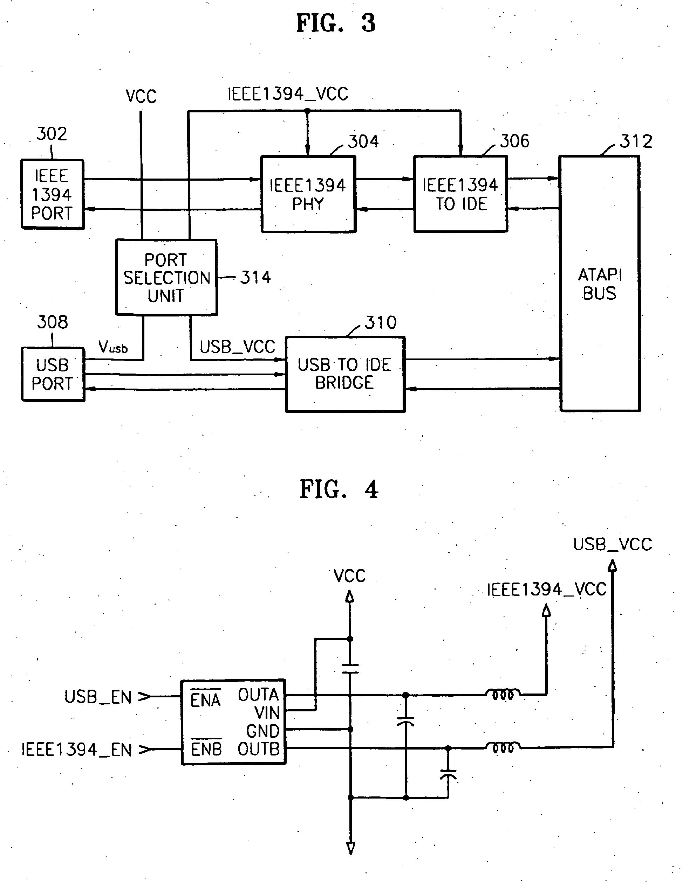

FIG. 3 is a block diagram showing the structure of a preferred embodiment of a peripheral interface device according to the present invention which is applied to a hard disc drive. Compared to the device of FIG. 2, the peripheral interface device does not use the multiplexer/demultiplexer, and controls power supply so as to selectively operate the IEEE1394/IDE bridge 106 and the USB/IDE bridge 110.

The device shown in FIG. 3 comprises an IEEE1394 port 302 to which an IEEE1394 connector can be connected; an IEEE1394 physical layer processor 304 which processes the physical layer of an IEEE1394 signal; an IEEE1394/IDE bridge 306 which processes the link layer of an IEEE1394 signal; a USB port 308 to which a USB connector can be connected; a USB/IDE bridge 310 which processes the physical layer and link layer of a USB signal; a port selection unit 314 which controls the operations of the IEEE1394 physical layer processor 304, the IEEE1394/IDE bridge 306, and the USB/IDE bridge 310; and an ATAPI bus connector 312.

In the device of FIG. 3, the operation of the port selection unit 314 is controlled by a signal provided to the USB port 308. That is, if USB power (Vusb) is provided, the port selection unit 314 controls so that operation power IEEE1394_VCC is not provided to the IEEE1394 physical layer processor 304 and the IEEE1394/IDE bridge 306, and operation power USB_VCC is provided to the USB/IDE bridge 310 Accordingly, when the device shown in FIG. 3 is connected through the USB port 310, only the USB/IDE bridge 310 operates while the IEEE1394 physical layer processor 304 and the IEEE1394/IDE bridge 306 do not operate. Therefore, the possibility that noise is caused by the IEEE1394/IDE bridge 306 is removed.

Meanwhile, if the USB power (Vusb) is not provided (that is, when the device is connected through an IEEE port), the port selection unit 314 controls so that operation power IEEE1394_VCC is provided to the IEEE1394 physical layer processor 304 and the IEEE1394/IDE bridge 306, and operation power USB_VCC is not provided to the USB/IDE bridge 310. Accordingly, when the device of FIG. 3 is connected through the IEEE1394 port 302, the IEEE1394 physical layer processor 304 and the IEEE1394/IDE bridge 306 operate, while the USB/IDE bridge 310 does not operate. Therefore, the possibility that noise is caused by the USB/IDE bridge 310 is removed.

In addition, since the device shown in FIG. 3 does not use the multiplexer/demultiplexer 214 unlike the device of FIG. 2, the device ; if applied to a portable hard disc, helps to reduce the size of the portable hard disc.

FIG. 4 is a circuit diagram showing a detailed structure of the port selection unit 314 shown in FIG. 3.

The unit shown in FIG. 4 receives two inputs $(\overline{ENA}, \overline{ENB})$ that are complementary to each other, and according to the states and operation modes (active low, high), generates outputs that are incompatible (OUTA, OUTB). Here, an operation mode is "active low", OUTA corresponds to IEEE1394 operation power (IEEE 1394_VCC), and OUTB corresponds to USB operation power (USB_VCC).

For example, if $\overline{ENA}$ and $\overline{ENB}$ are logic 0 and logic 1, respectively, OUTA=VIN is output, while OUTB is not output. On the contrary, if $\overline{ENA}$ and $\overline{ENB}$ are logic 1 and logic 0, respectively, OUTA is not output, while OUTB=VIN is not output.

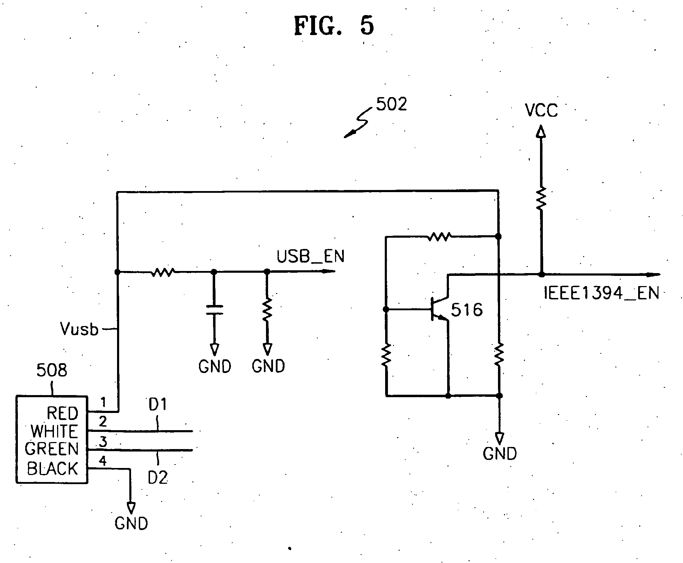

FIG. 5 is a diagram of the structure of a buffer for generating complementary signals (USB_EN, IEEE 1394_EN) that are input to the device shown in FIG. 4. If Vusb is provided, USB_EN becomes 1, a transistor 516 short-circuits; and IEEE1394_EN=0 is output. On the contrary, if Vsub is not provided, USB_EN becomes 0, the transistor 516 is open, and IEEE1394_EN=1 is output.

By the operation of the port selection unit 314, the priority between the USB interface method and the IEEE1394 interface method is established. That is, when both the IEEE1394 port 302 and the USB port 308 are connected, only the USB port 308 is used so that abnormal operations and troubles can be prevented.

In the device shown in FIG. 3, the priority between the USB interface method and the IEEE1394 interface method can be changed. The change is performed by providing an IEEE1394 type power signal (V1394), not a USB type power signal (Vusb), to the port selection unit 314.

The device shown in FIG. 3 is applied to the interface using only the IEEE1394 bus and the USB bus. However, the device shown in FIG. 3 can be easily extended also when more than two interface methods are used.

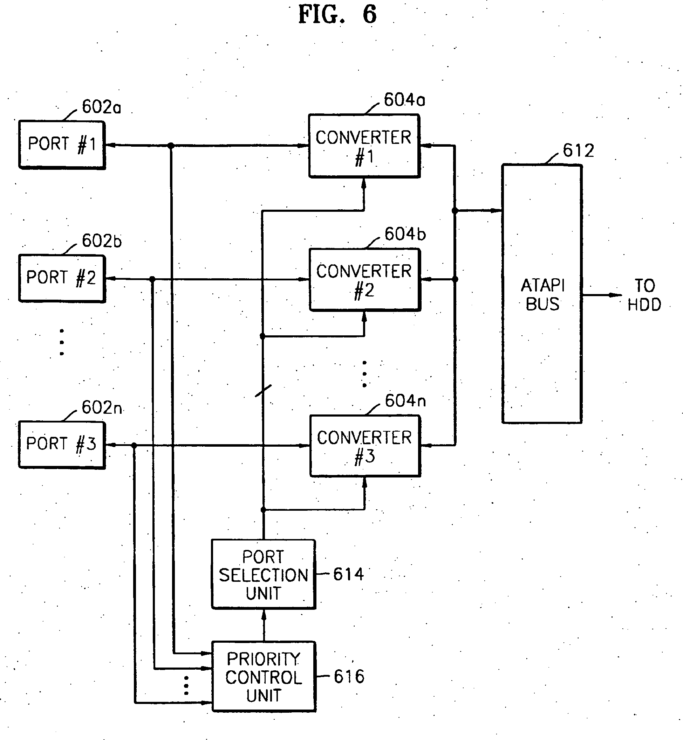

FIG. 6 is an exemplary block diagram of the structure of another preferred embodiment of the present invention that is applied to multiple interface types.

The device shown in FIG. 6 comprises a plurality of ports 602a through 602n appropriate to the multiple interface types; converters 604a through 604n that are connected to respective ports and appropriate to the multiple interface methods; a port selection unit 614 which control the operation power of each converters 604a through 604n; a priority control unit 616; and an ATAPI bus connector 612.

The ports may be, for example, IEEE1394 ports to which IEEE1394 connectors can be connected, or USB ports to which USB connectors can be connected.

The converters 604 may be, for example, an IEEE/IDE converter comprising an IEEE1394 physical layer processor which processes the physical layer of an IEEE1394 signal, and an IEEE1394/IDE bridge which processes the link layer of an IEEE1394 signal, or a USB/IDE converter comprising a USB/IDE bridge.

The priority control unit 616 receives signals of multiple interface methods, and generates an identification signal indicating which interface method among the methods is used. Also, when two or more signals are received, the priority control unit 616 determines a priority among the signals according to a predetermined priority, and generates an identification signal corresponding to the priority.

The port selection unit 614 generates power corresponding to a provided identification signal. At this time, other powers enter in a disabled state.

By the operations of the priority control unit 616 and the port selection unit 614, a priority between interface methods is established. That is, when two or more interface methods are used through two or more ports, only one interface method among them is used so that abnormal operations and troubles are prevented.

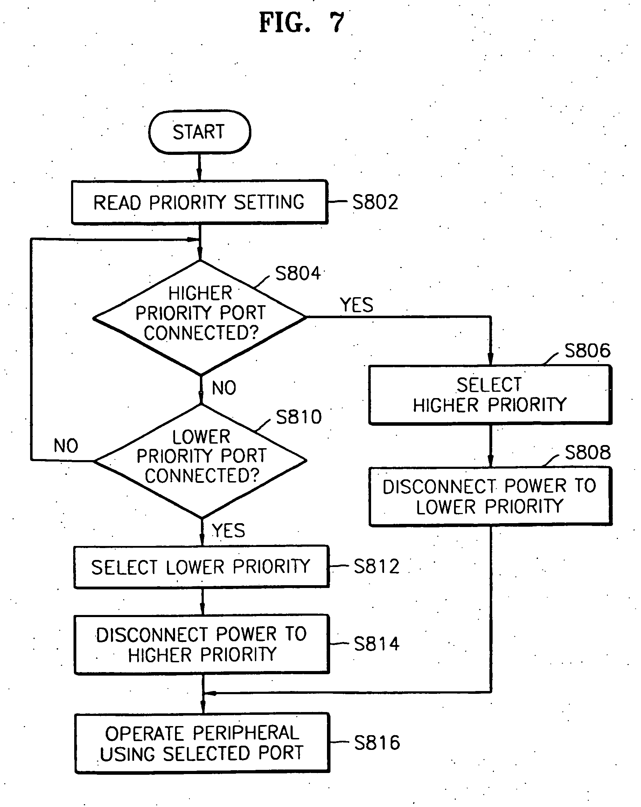

FIG. 7 is a flowchart showing a preferred embodiment of a peripheral interface method according to the present invention.

According to the peripheral interface method shown in FIG. 7, in a peripheral interface device having two interface ports as shown in FIG. 2, based on a preset priority, only one interface port is selected and the other interface port is disabled. In order to disable the interface, as described above referring to FIG. 2, the operation of a converter corresponding to an interface port which is not selected is disabled, and more specifically, the power of the converter is cut off to disable the interface.

First, priority setting is read in step S802. The priority is set, for example, as USB->IEEE1394.

Based on the read priority setting, it is determined whether or not a higher priority port is connected in step S804.

If a higher priority port is connected in step S804, the higher priority port is selected in step S806.

Power that is provided to,a converter corresponding to the remaining lower priority port is cut off in step S808.

If a higher priority port is not connected in step S804, it is determined whether or not a lower priority port is connected in step S810. If the lower priority port is not connected, either, the step S802 is performed.

If the lower priority port is connected, the port is selected in step S812.

Power which is provided to the converter corresponding to the remaining higher priority port is cut off in step S814.

Using the selected port, the peripheral is operated in step S816.

The method shown in FIG. 7 can be easily applied to the interface device having a plurality of interface ports as shown in FIG. 6.

Here, the steps S808 and S812 are modified to cut off power provided to converters corresponding to the remaining ports except the selected port, and the step S810 is also modified so that if a next higher priority port is not connected, it is determined whether or not a second next higher priority port is connected.

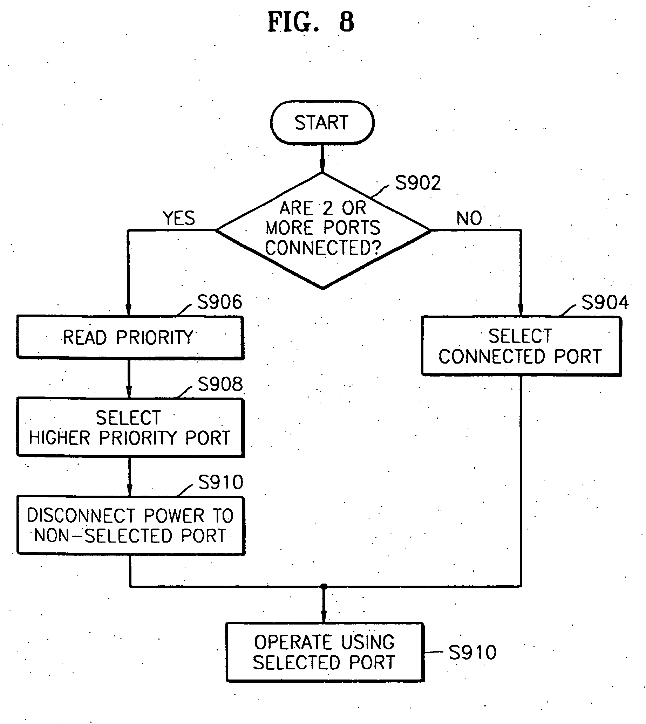

FIG. 8 is a flowchart showing another preferred embodiment of a peripheral interface method according to the present invention.

According to the peripheral interface method shown in FIG. 8, in the peripheral interface device having two ore more interface ports as shown in FIG. 6, an interface port having the highest priority is selected among interface ports according to the priority setting, and other ports are disabled. In order to disable the interfaces, as described above referring to FIG. 6, the operations of converters corresponding to interface ports which are not selected are disabled, and more specifically, the power of the converters are cut off to disable the interfaces.

First, it is determined whether or not two or more ports are connected in step S902.

If only one port is connected, the connected port is selected in step S904. That is, operation power is provided to a converter corresponding to the connected port.

If two or more ports are connected, only one port having a higher priority according to the priority setting is selected.

The priority setting is read in step S906. The priority is set, for example, as USB -> IEEE1394 -> RS232C -> ... .

Based on the read priority setting, a port having a higher priority is selected in step S908.

Power that is provided to converters corresponding to the ports not selected is cut off in step S910.

Using the selected port, the peripheral is operated in step S912.

Those skilled in the art easily understand that the hard disc interface device and the priority control method described as embodiments of the present invention are easily applied to a portable hard disc. Also, those skilled in the art easily understand that the hard disc interface device and the priority control method described above are easily applied to not only hard disc but also to other peripherals without significant modification.

The scope of the present invention is determined by the accompanying claims.

As described above, the peripheral interface device and priority control method according to the present invention can support multiple interface methods so that expandability of peripherals is obtained.

Also, the peripheral interface device and priority control method according to the present invention, when applied to a portable hard disc, enables to reduce the size of the portable hard disc and provides stable operation.

**Claims**

1. A peripheral interface device comprising:

　　a at least one port, each of which supports at least one interface method;
　　a at least one interface converter which is connected to a respectively appropriate port and converts signals of an interface method corresponding to the ports into signals of interface methods appropriate to a peripheral ; **characterized in that**
　　a priority determining unit which receives the signals of respective interface methods from at least one port, identifies the method of a connected interface, and when two or more interfaces are connected, determines the priority among the interfaces;

a port selection unit which according to the result of identification by the priority control unit, controls supply of power in order to selectively operate one of a plurality of interface converters; and

a connection unit which is connected to at least one of the interface converters and transmits and receives a signal of an interface method appropriate to the peripheral.

2. The peripheral interface device of claim 1, wherein the interface converters comprise converters appropriate to at least an IEEE1394 bus and a USB bus.

3. The peripheral interface device of claim 2, wherein the port selection unit controls power provided to converters appropriate to the IEEE1394 bus and the USB bus in response to a USB power signal.

4. The peripheral interface device of claim 2 or 3, further comprising: a buffer which generates an enable signal (ENB) indicating whether or not a USB port is connected, and a signal having the inverse logic state of the enable signal, according to the state of the USB power signal.

5. The peripheral interface device of claim 2, 3 or 4, wherein the port selection unit in response to an IEEE1394 signal controls power provided to converters appropriate to the IEEE1394 bus and the USB bus.

6. The peripheral interface device of claim 2, 3, 4 or 5, wherein the port selection unit in response to a USB signal controls power provided to converters appropriate to the IEEE1394 bus and the USB bus.

7. The peripheral interface device of one of the previous claims wherein said peripheral is a hard disk.

8. A priority control method of a peripheral interface device having at least one port, which supports an interface method, and at least one interface converter which is connected to a respectively appropriate port and converts signals of the interface method corresponding to the port into signals of the interface method appropriate to a peripheral, the method is **characterized in** comprising:

determining whether or not one, two or more ports are connected;

if only one port is connected, selecting the connected port and providing operation power only to a converter corresponding to the connected port;

if two or more ports are connected, reading a priority among ports; and

based on the read priority setting, selecting a port having a higher priority, and cutting off power provided to converters corresponding to the remaining ports that are not selected.

9. The priority control method of claim 8 further comprising:

based on the read priority setting, determining whether or not a high priority port is connected;

if the higher priority port is connected, selecting the higher priority port, and cutting off power provided to a converter corresponding to the remaining lower priority port; and

if the higher priority port is not connected, determining whether or not the lower priority port is connected, and if the lower priority port is connected, selecting the port, and cutting off power provided to a converter corresponding to the remaining higher priority port.

**Patentansprüche**

1. Peripherie-Schnittstellenvorrichtung, die umfasst:

wenigstens einen Port, von denen jeder wenigstens ein Schnittstellenverfahren unterstützt;

wenigstens einen Schnittstellenwandler, der mit einem jeweils geeigneten Port verbunden ist und Signale eines Schnittstellenverfahrens, das den Ports entspricht, in Signale von Schnittstellenverfahren umwandelt, die für eine Peripherieeinrichtung geeignet sind;

**gekennzeichnet durch**

eine Prioritäts-Bestimmungseinheit, die die Signale jeweiliger Schnittstellenverfahren von wenigstens einem Port empfängt, das Verfahren einer angeschlossenen Schnittstelle identifiziert und, wenn zwei oder mehr Schnittstellen angeschlossen sind, die Priorität zwischen den Schnittstellen bestimmt;

eine Port-Auswähleinheit, die entsprechend dem Ergebnis der Identifizierung **durch** die Prioritäts-Steuereinheit Zufuhr von Strom steuert, um selektiv einen einer Vielzahl von Schnittstellenwandlern zu betreiben; und

eine Anschlusseinheit, die an wenigstens einen der Schnittstellenwandler angeschlossen ist und ein Signal eines Schnittstellenverfahrens sendet und empfängt, das für die Peripherieeinrichtung geeignet ist.

2. Peripherie-Schnittstellenvorrichtung nach Anspruch 1, wobei die Schnittstellenwandler Wandler umfassen, die für wenigstens einen IEEEE 1394-Bus oder einen USB-Bus geeignet sind.

3. Peripherie-Schnittstellenvorrichtung nach Anspruch 2, wobei die Port-Auswähleinheit Strom, der Wandlern bereitgestellt wird, die für den IEEE-1394-Bus und den USB-Bus geeignet sind, in Reaktion auf ein USB-Stromsignal steuert.

4. Peripherie-Schnittstellenvorrichtung nach Anspruch 2 oder 3, die des Weiteren einen Puffer umfasst, der entsprechend dem Zustand des USB-Stromsignals ein Freigabesignal (ENB), das anzeigt, ob ein USB-Port angeschlossen ist oder nicht, sowie ein Signal erzeugt, das den umgekehrten logischen Zustand zu dem Freigabe-Signal hat.

5. Peripherie-Schnittstellenvorrichtung nach Anspruch 2, 3 oder 4, wobei die Portauswähleinheit in Reaktion auf ein IEEE-1394-Signal Strom steuert, der Wandlern bereitgestellt wird, die für den IEEE-1394-Bus und den USB-Bus geeignet sind.

6. Peripherie-Schnittstellenvorrichtung nach Anspruch 2, 3, 4 oder 5, wobei die Port-auswähleinheit in Reaktion auf ein USB-Signal Strom steuert, der Wandlern bereitgestellt wird, die für den IEEE-1394-Bus und den USB-Bus geeignet sind.

7. Peripherie-Schnittstellenvorrichtung nach einem der vorangehenden Ansprüche, wobei die Peripherieeinrichtung eine Festplatte ist.

8. Prioritäts-Steuerverfahren einer Peripherie-Schnittstellenvorrichtung, die wenigstens einen Port, der ein Schnittstellenverfahren unterstützt, sowie wenigstens einen Schnittstellenwandler aufweist, der mit einem jeweils geeigneten Port verbunden ist und Signale des Schnittstellenverfahrens, das dem Port entspricht, in Signale des Schnittstellenverfahrens umwandelt, das für eine Peripherieeinrichtung geeignet ist, wobei das Verfahren **dadurch gekennzeichnet ist, dass** es umfasst:

Feststellen, ob ein, zwei oder mehr Ports angeschlossen sind oder nicht; wenn nur ein Port angeschlossen ist, Auswählen des angeschlossenen Ports und Bereitstellen von Betriebsstrom nur für einen Wandler, der dem angeschlossenen Port entspricht; wenn zwei oder mehr Ports angeschlossen sind, Lesen einer Priorität zwischen den Ports; und auf Basis der gelesenen Prioritätseinstellung Auswählen eines Ports mit einer höheren Priorität und Abschalten von Strom, der Wandlern bereitgestellt wird, die den verbleibenden Ports entsprechen, die nicht ausgewählt sind.

9. Prioritäts-Steuerverfahren nach Anspruch 8, das des Weiteren umfasst:

auf Basis der gelesenen Prioritätseinstellung Feststellen, ob ein Port hoher Priorität angeschlossen ist oder nicht; wenn der Port höherer Priorität angeschlossen ist, Auswählen des Ports höherer Priorität und Abschalten von Strom, der einem Wandler bereitgestellt wird, der dem verbleibenden Port niedrigerer Priorität entspricht; und wenn der Port höherer Priorität nicht angeschlossen ist, Feststellen, ob der Port niedrigerer Priorität angeschlossen ist oder nicht, und wenn der Port niedrigerer Priorität angeschlossen ist, Auswählen des Ports und Abschalten von Strom, der einem Wandler bereitgestellt wird, der dem verbleibenden Port höherer Priorität entspricht.

## Revendications

1. Dispositif d'interface de périphérique comprenant :

au moins un port, dont chacun prend en charge au moins un procédé d'interface ; au moins un convertisseur d'interface qui est connecté à un port respectif approprié et convertit des signaux d'un procédé d'interface correspondant aux ports en signaux de procédés d'interface appropriés pour un périphérique, **caractérisé en ce que** une unité de détermination de priorité qui reçoit les signaux de procédés d'interface respectifs depuis au moins un port, identifie le procédé d'une interface connectée, et lorsque deux interfaces ou plus sont connectées, détermine la priorité entre les interfaces ; une unité de sélection de port qui, en fonction du résultat d'identification par l'unité de commande de priorité, commande l'alimentation électrique afin d'actionner sélectivement l'un parmi une pluralité de convertisseurs d'interface ; et une unité de connexion qui est connectée à au moins un des convertisseurs d'interface et reçoit un signal d'un procédé d'interface approprié pour le périphérique.

2. Dispositif d'interface de périphérique selon la revendication 1, dans lequel les convertisseurs d'interface comprennent des convertisseurs appropriés pour au moins un bus IUUU1394 et un bus USB.

3. Dispositif d'interface de périphérique selon la revendication 2, dans lequel l'unité de sélection de port commande l'alimentation fournie aux convertisseurs appropriés pour le bus IEEE1384 et le bus USB en réponse à un signal d'alimentation USB.

**4.** Dispositif d'interface de périphérique selon la revendication 2 ou 3, comprenant en outre : une mémoire tampon qui génère un signal d'activation (ENB) indiquant si un port USB est connecté ou non, et un signal ayant l'état logique inverse du signal d'activation, conformément à l'état du signal d'alimentation USB.

**5.** Dispositif d'interface de périphérique selon la revendication 2, 3 ou 4, dans lequel l'unité de sélection de port en réponse à un signal IEEE1394 commande l'alimentation fournie aux convertisseurs appropriés pour le bus IEEE1384 et pour le bus USB.

**6.** Dispositif d'interface de périphérique selon la revendication 2, 3, 4 ou 5, dans lequel l'unité de sélection de port en réponse à un signal USB commande l'alimentation fournie aux convertisseurs appropriés pour le bus IEEE1384 et le bus USB.

**7.** Dispositif d'interface de périphérique selon l'une des revendications précédentes dans lequel ledit périphérique est un disque dur.

**8.** Procédé de commande de priorité d'un dispositif d'interface de périphérique ayant au moins un port, qui prend en charge un procédé d'interface, et au moins un convertisseur d'interface qui est connecté à un port respectivement approprié et convertit des signaux du procédé d'interface correspondant au port en signaux du procédé d'interface approprié pour un périphérique, le procédé étant **caractérisé en ce qu'**il comprend les étapes consistant à :

déterminer si oui ou non, deux ports ou plus sont connectés ;
si un seul port est connecté, sélectionner le port connecté et fournir une alimentation de service uniquement à un convertisseur correspondant au port connecté ;
si deux ports ou plus sont connectés, lire une priorité parmi les ports ; et
sur la base du paramètre de priorité lu, sélectionner un port ayant une priorité plus élevée, et couper l'alimentation fournie aux convertisseurs correspondant aux ports restants qui ne sont pas sélectionnés.

**9.** Procédé de commande de priorité selon la revendication 8 comprenant en outre les étapes consistant à :

sur la base du paramètre de priorité lu, déterminer si un port de priorité élevée est connecté ou non ;

si le port de priorité plus élevée est connecté, sélectionner le port de priorité plus élevée, et couper l'alimentation fournie à un convertisseur correspondant au port de priorité plus faible restant ; et
si le port de priorité plus élevée n'est pas connecté, déterminer si le port de priorité plus faible est connecté ou non, et si le port de priorité plus faible est connecté, sélectionner le port et couper l'alimentation fournie à un convertisseur correspondant au port de priorité plus élevée restant.

## FIG. 1 (PRIOR ART)

```
  102                 104                  106                    112
┌──────────┐      ┌──────────┐      ┌──────────────┐      ┌──────────┐
│ IEEE1394 │ ───▶ │ IEEE1394 │ ───▶ │   IEEE1394   │ ───▶ │          │
│   PORT   │      │   PHY    │      │ TO IDE BRIDGE│      │          │
│          │ ◀─── │          │ ◀─── │    (LINK)    │ ◀─── │          │
└──────────┘      └──────────┘      └──────────────┘      │  ATAPI   │
                                                          │   BUS    │
  108                 110                                 │          │
┌──────────┐      ┌──────────────┐                        │          │
│   USB    │ ───▶ │  USB TO IDE  │ ─────────────────────▶ │          │
│   PORT   │      │    BRIDGE    │                        │          │
│          │ ◀─── │  (PHY+LINK)  │ ◀───────────────────── │          │
└──────────┘      └──────────────┘                        └──────────┘
```

## FIG. 2 (PRIOR ART)

```
  202             204              206              214          212
┌─────────┐   ┌──────────┐   ┌──────────────┐   ┌────────┐   ┌────────┐
│ IEEE1394│──▶│ IEEE1394 │──▶│   IEEE1394   │──▶│        │   │        │
│  PORT   │   │   PHY    │   │ TO IDE BRIDGE│   │        │   │        │
│         │◀──│          │◀──│    (LINK)    │◀──│        │   │        │
└─────────┘   └──────────┘   └──────────────┘   │ MUX/   │──▶│ ATAPI  │
                                                │ DEMUX  │   │  BUS   │
  208             210                           │        │◀──│        │
┌─────────┐   ┌──────────────┐                  │        │   │        │
│  USB    │──▶│  USB TO IDE  │ ────────────────▶│        │   │        │
│  PORT   │   │    BRIDGE    │                  │        │   │        │
│         │◀──│  (PHY+LINK)  │ ◀────────────────│        │   └────────┘
└────┬────┘   └──────────────┘                  └───▲────┘
     │                                              │
     └──────────────────────────────────────────────┘
```

# FIG. 3

VCC  IEEE1394_VCC

302

| IEEE 1394 PORT |

304  | IEEE1394 PHY |

306  | IEEE1394 TO IDE |

312  | ATAPI BUS |

| PORT SELECTION UNIT | — 314

308  | USB PORT |

V_usb  USB_VCC

310  | USB TO IDE BRIDGE |

# FIG. 4

VCC

USB_VCC

IEEE1394_VCC

USB_EN  $\overline{ENA}$  OUTA

VIN

GND

IEEE1394_EN  $\overline{ENB}$  OUTB

## FIG. 5

# FIG. 6

EP 1 372 081 B1

# FIG. 7

START

READ PRIORITY SETTING —S802

HIGHER PRIORITY PORT CONNECTED? — S804

YES → SELECT HIGHER PRIORITY — S806 → DISCONNECT POWER TO LOWER PRIORITY — S808

NO → LOWER PRIORITY PORT CONNECTED? — S810

NO

YES → SELECT LOWER PRIORITY — S812 → DISCONNECT POWER TO HIGHER PRIORITY — S814

OPERATE PERIPHERAL USING SELECTED PORT — S816

# FIG. 8

START

↓

S902

ARE 2 OR
MORE PORTS
CONNECTED?

YES ← → NO

S906

READ PRIORITY

↓

S908

SELECT
HIGHER PRIORITY PORT

↓

S910

DISCONNECT POWER TO
NON-SELECTED PORT

S904

SELECT
CONNECTED PORT

OPERATE USING
SELECTED PORT — S910